# FASCICULE DE BREVET EUROPEEN

(11) **EP 2 809 178 B1**
(45) Date de publication et mention de la délivrance du brevet: **30.05.2018**
(21) Numéro de dépôt: 13703014.4
(22) Date de dépôt: 01.02.2013
(51) Int. Cl.: A23L 7/10, A23L 11/30, A23L 33/00, A23L 33/17, A23L 25/00

(54) **PROCÉDÉ DE PRÉPARATION D'UN ALIMENT HYPOALLERGÉNIQUE**
VERFAHREN ZUR HERSTELLUNG EINES HYPOALLERGENEN NAHRUNGSMITTELS
METHOD FOR PREPARING A HYPOALLERGENIC FOOD

(30) Priorité: 02.02.2012 FR 1250977
(43) Date de publication de la demande: 10.12.2014
(73) Titulaire: Societe Financiere Cormouls Houles, 31240 Saint-Jean (FR); Université Paul Sabatier Toulouse III, 31400 Toulouse (FR); Centre National de la Recherche Scientifique (C.N.R.S.), 75016 Paris (FR)
(72) Inventeur: BRUNET, Etienne, F-31400 Toulouse (FR); BARRE, Annick, F-31000 Toulouse (FR); CAZE-SUBRA, Stéphanie, F-31100 Toulouse (FR); CORMOULS-HOULES, Nicolas, F-31500 Toulouse (FR); LE MOUEL, Vincent, F-31000 Toulouse (FR); ROUGÉ, Pierre, F-31320 Auzeville-Tolosane (FR)
(74) Mandataire: Ipside
(86) Numéro de dépôt international: PCT/EP2013/052097
(87) Numéro de publication internationale: WO 2013/113908

(56) Documents cités:
- WO-A1-01/50888
- DE-A1- 19 905 160
- JP-B2- 3 653 132
- US-A- 5 476 677
- TAKEO KATO ET AL: "Release of Allergenic Proteins from Rice Grains Induced by High Hydrostatic Pressure", JOURNAL OF AGRICULTURAL AND FOOD CHEMISTRY, vol. 48, no. 8, 1 août 2000 (2000-08-01), pages 3124-3129, XP055031809, ISSN: 0021-8561, DOI: 10.1021/jf000180w
- DATABASE WPI Week 199232 Thomson Scientific, London, GB; AN 1992-268326 XP002679819, & WO 92/11772 A1 (INOUE T) 23 juillet 1992 (1992-07-23)
- NAKAMURA T ET AL: "PRODUCTION OF LOW ANTIGENIC WHEY PROTEIN HYDROLYSATES BY ENZYMATIC HYDROLYSIS AND DENATURATION WITH HIGH PRESSURE", MILCHWISSENSCHAFT, vol. 48, no. 3, 1 janvier 1993 (1993-01-01), pages 141-145, XP002059420, VV GMBH VOLKSWIRTSCHAFTLICHER VERLAG. MUNCHEN, DE ISSN: 0026-3788

## Description

La présente invention s'inscrit dans le domaine de la préparation d'aliments hypoallergéniques. Elle concerne un procédé de préparation d'un aliment à allergénicité réduite à partir d'une matrice alimentaire solide à plus forte allergénicité, tel que défini dans les revendications. L'Organisation Mondiale de la Santé classe à l'heure actuelle les allergies au 3^{ème} rang mondial des maladies chroniques les plus répandues. Dans les pays industrialisés, on estime qu'elles touchent près d'un individu sur trois, et une proportion d'un individu sur deux est envisageable à l'horizon 2030 si l'augmentation des cas d'allergie enregistrés durant les dix dernières années devait se poursuivre au même rythme. Les allergies alimentaires représentent environ 5 % des allergies, et jusqu'à 10 % chez les enfants. Elles sont en augmentation constante depuis plusieurs années.

En particulier, les allergies à l'arachide et aux fruits à coque (noix, noisette, noix de cajou, noix de pécan, pistache, etc.) occupent une place importante dans la classe des allergies alimentaires, en raison de leur prévalence élevée et surtout de leur gravité. Elles se traduisent fréquemment par des oedèmes bucopharyngés ou des chocs anaphylactiques généralisés. Ces allergies exigent par conséquent de respecter un régime alimentaire strict, dont sont écartés tous les produits susceptibles de contenir de l'arachide ou des fruits à coque. Certaines réglementations européennes ou internationales imposent la mention de la présence de ces produits dans l'étiquetage des aliments. Les allergènes majeurs en cause dans ces allergies correspondent essentiellement à des protéines de réserve, qui s'accumulent en quantités appréciables dans les graines en maturation, et qui sont indissociables de la graine. Lors de la germination de la graine, ces protéines de réserve ont pour rôle de fournir à la jeune plante les acides aminés nécessaires à sa croissance.

On définit ici comme des allergènes majeurs, les allergènes pour lesquels 50 % au moins des individus allergiques possèdent les anticorps IgE correspondants. La plupart des allergènes protéiques majeurs de l'arachide et des fruits à coque ont à ce jour été identifiés. Ces allergènes majeurs correspondent essentiellement à des vicilines, des légumines et des albumines 2S.

Par exemple, à ce jour, onze protéines allergènes différentes ont été identifiées dans l'arachide, nommées Ara h 1 à Ara h 11. Parmi elles, Ara h 1 (viciline de poids moléculaire 63,5 kDa) et Ara h 2 (albumine 2S de poids moléculaire 16-17 kDa) représentent respectivement environ 12 à 16 %, et 6 à 9 %, des protéines de l'arachide. Plus de 95 % des individus allergiques à l'arachide présentent des anticorps IgE spécifiques de ces deux protéines. Ara h 3, une légumine, a également été identifiée come un allergène majeur de l'arachide.

Il a été proposé par l'art antérieur différents procédés pour diminuer le degré d'allergénicité des aliments à base de matières premières fortement allergéniques, notamment à base d'arachide.

On peut citer, à titre d'exemples, l'amélioration génétique, par sélection par croisements de variétés pauvres en allergènes, ou l'élaboration d'arachides génétiquement modifiées à faible teneur en allergènes. Ces techniques ne donnent cependant pas des résultats satisfaisants, dans la mesure où la synthèse et l'accumulation des allergènes majeurs de l'arachide obéissent à des systèmes multifactoriels dont l'expression est difficile à modifier. En outre, la modification par les techniques du génie génétique se heurte au problème de l'utilisation des organismes génétiquement modifiés dans le domaine de l'agro-alimentaire.

Diverses méthodes de traitement physico-chimique des graines d'arachide ont également été proposées mais, à l'heure actuelle, aucune n'a donné de résultats probants, qu'il s'agisse notamment de traitements par la chaleur (Davis et al., 1998), par rayonnement UV (Chung et al., 2008), par des protéases digestives telles que la trypsine ou la pepsine (van Boxtel et al., 2008) ou par addition d'autres composés, tels que des agents complexants, par exemple l'acide phytique (Chung et al., 2007).

Il a autrement été proposé par l'art antérieur, notamment dans la publication scientifique de Kato et al. (Kato, 2000), ou dans les documents de brevet WO 92/11772, JP 3 653132 et US 5 476 677, des procédés pour réduire l'allergénicité de certaines graines, plus particulièrement du riz et des céréales, par traitement de ces graines par pressurisation hydrostatique, visant à libérer les protéines allergènes qui y sont contenues. Ces procédés ne permettent cependant de libérer qu'une partie de ces protéines allergènes, d'autant plus faible lorsque ces dernières sont naturellement peu disponibles à l'extraction, car présentes dans les graines sous forme de corps protéiques compacts.

La présente invention vise à remédier aux inconvénients des procédés de préparation d'aliments d'allergénicité réduite proposés par l'art antérieur, notamment à ceux exposés ci-avant, en proposant un tel procédé qui permette d'obtenir, à partir d'une matrice alimentaire solide présentant naturellement une forte allergénicité, un aliment d'allergénicité fortement réduite, voire nulle.

Un objectif supplémentaire de l'invention est que ce procédé, en plus d'être alimentairement compatible, soit non polluant, et notamment qu'il ne mette en oeuvre aucun solvant ni additif ionisant, de sorte à respecter intégralement non seulement l'innocuité mais aussi les propriétés gustatives et nutritionnelles de la matrice alimentaire initiale.

A cet effet, il est proposé selon la présente invention un procédé de préparation d'un aliment à allergénicité réduite à partir d'une matrice alimentaire solide particulaire à plus forte allergénicité, contenant des protéines allergènes. Ce procédé comprend une étape de traitement d'une dispersion de la matrice alimentaire solide dans un véhicule aqueux, par homogénéisation à haute, de préférence à ultra haute, pression, c'est-à-dire en conditions hydrodynamiques, de sorte à obtenir un homogénéisât constitué d'une dispersion de protéines allergènes initialement contenues dans la matrice, en mélange avec des particules solides de la matrice. Avantageusement, cette étape permet d'extraire de la matrice la quasi totalité des protéines allergènes qui y étaient initialement contenues, et notamment des allergènes majeurs.

Par particulaire, on entend ici que la matière alimentaire solide est formée de particules, sans limitation de taille pour ces particules. Ainsi, le terme particules englobe ici les graines, grains, noix, etc. entiers, quelle que soit leur taille. Ce terme englobe également par exemple les cellules, organites cellulaires, etc.

Par matrice alimentaire solide, on entend une matière première comestible sous forme solide, notamment d'origine végétale, ou un dérivé solide d'une telle matière première. Préférentiellement, la matrice alimentaire solide est une, ou est à base d'une, matière première brute, c'est-à-dire n'ayant subi aucune étape de purification ou de séparation de ses composants. Plus particulièrement, la matrice alimentaire solide peut être constituée de graines alimentaires présentant une allergénicité, en particulier de graines d'arachide et/ou de fruits dits à coque tels que des noix, noisettes, noix de cajou, noix de pécan, noix de macadamia, noix du Brésil, pistaches, amandes, pignons, châtaignes, etc. La matrice alimentaire peut également être constituée à base de fruits autres que ceux dits à coque, tels que des pommes, du raisin, etc., ces derniers pouvant avoir subi des étapes de transformation préalablement à la mise en oeuvre du procédé selon l'invention, par exemple d'épluchage, de tranchage, de découpage, etc.

Dans le cas où la matrice alimentaire solide est à base d'arachide, il s'agit des graines brutes. Il en est de même dans les cas où la matrice alimentaire est à base de fruits à coques, la matrice consistant alors en fruit à coque bruts. L'allergénicité est ici définie de manière classique en elle-même, comme la capacité d'une substance à provoquer une réaction allergique, c'est-à-dire une réaction problématique du système immunitaire chez certains sujets qui manifestent une hypersensibilité à l'égard de cette substance. La réaction allergique met en jeu plusieurs anticorps, dont les immunoglobulines E (IgE), une classe spécifique d'immunoglobulines sécrétées par les lymphocytes B. En présence de l'allergène, substance biologique ou chimique reconnue par le système immunitaire humain qui provoque une réaction ou une réponse allergique, l'anticorps déclenche la libération de médiateurs chimiques qui causent la réaction allergique, pouvant se traduire par divers symptômes plus ou moins graves tels que des démangeaisons, des éruptions cutanées, une gêne respiratoire, des vomissements, de la diarrhée, un oedème bucopharyngé ou une réaction anaphylactique généralisée (choc anaphylactique).

La technique d'homogénéisation à haute pression mise en oeuvre dans le cadre de la présente invention est connue en elle-même, et consiste à projeter à débit constant un produit liquide ou pâteux, sous forte pression, typiquement comprise entre 30 et 40 000 bars, à travers une tête d'homogénéisation, au travers d'un espace de quelques µm laissé libre par une vanne de contre-pression. La pression en amont de cette vanne devient alors très forte, et la décompression brutale en aval de la vanne provoque des phénomènes entrainant une modification du produit dispersé, notamment des phénomènes de cisaillement, micro-turbulence et cavitation. Cette technique est notamment décrite comme permettant de stabiliser des émulsions grasses ou d'obtenir de faibles granulométries au sein d'une émulsion ou d'une dispersion de solides dans une phase liquide. Son mode de fonctionnement détaillé est notamment décrit dans la publication de Lecluse, 1979.

De manière inattendue, il a maintenant été découvert par les présents inventeurs que le traitement par homogénéisation à haute pression d'une dispersion dans un véhicule aqueux d'une matrice alimentaire solide permettait de solubiliser les protéines allergènes contenues dans cette matrice, y compris lorsque, comme dans le cas de la graine d'arachide brute, ces protéines allergènes sont naturellement peu disponibles à l'extraction, car incluses dans la matrice sous forme de corps protéiques compacts.

Cette étape de traitement, réalisé en conditions hydrodynamiques, par projection de la dispersion de la matrice alimentaire sous haute pression à travers une tête d'homogénéisation, s'avère notamment bien plus avantageuse que les simples traitements de pressurisation, en conditions hydrostatiques, proposés par l'art antérieur, en terme de quantité de protéines allergènes extraites de la matrice.

Un traitement ultérieur de l'homogénéisât obtenu, par dégradation de ces protéines allergènes, permet avantageusement d'obtenir, directement ou après transformation, un produit alimentaire hypoallergénique, qui conserve intactes les propriétés gustatives et nutritionnelles initiales de la matrice alimentaire.

Le terme hypoallergénique est ici employé, en référence à un aliment, comme signifiant une tendance moindre à provoquer une réaction allergique, par rapport à la matrice alimentaire servant de base à sa préparation. Dans des modes de réalisation de l'invention, le procédé de préparation d'un aliment incluant une étape de traitement par homogénéisation à haute pression de la matrice alimentaire solide constituée de graines d'arachide brutes ou de fruits à coque bruts, permet d'obtenir une solubilisation importante, supérieure à 95 %, des protéines allergènes initialement contenues dans la matrice. En particulier, dans le cas des graines d'arachide, les trois protéines allergènes majeures, Ara h 1, Ara h 2 et Ara h 3, sont ainsi avantageusement quasiment totalement solubilisées dans le véhicule aqueux. Il en résulte, après une étape ultérieure de dégradation de ces protéines, une diminution significative, jusqu'à plus de 90 %, de l'allergénicité de ces protéines allergènes.

On ne préjugera pas ici des mécanismes sous-tendant un tel résultat avantageux. Dans le cas particulier des graines d'arachide, les protéines allergènes sont stockées dans les vacuoles de la graine qui, une fois saturées, sont ensuite déshydratées pour former les corps protéiques. Cette déshydratation conduit à un empaquetage des protéines qui s'arrangent alors dans des structures pseudo-cristallines, les rendant ainsi peu disponibles à l'extraction par les tampons utilisés couramment pour solubiliser les protéines. On peut supposer que le traitement par homogénéisation à haute pression, par une déstructuration de la matrice alimentaire solide, augmente la disponibilité et le degré de solvatation de ces protéines, ainsi que leur susceptibilité à subir des modifications biologiques et chimiques visant à leur dénaturation et dégradation.

L'allergénicité de l'aliment obtenu peut être évaluée par tout moyen connu de l'homme du métier, notamment par quantification de sa teneur en allergènes majeurs par des dosages immunologiques, par exemple par la technique connue sous le nom d'ELISA (pour l'anglais Enzyme-Linked ImmunoSorbent Assay), au moyen d'anticorps spécifiques de ces allergènes.

Suivant des modes de mise en oeuvre préférés, l'invention répond en outre aux caractéristiques suivantes, mises en oeuvre séparément ou en chacune de leurs combinaisons techniquement opérantes.

En particulier, le choix des paramètres opératoires préférentiels est réalisé de sorte à obtenir le meilleur rendement d'extraction des protéines allergènes contenues dans la matrice alimentaire solide lors de l'étape d'homogénéisation à haute pression.

Dans des modes de mise en oeuvre de l'invention, la matrice alimentaire solide est soumise à une étape de broyage préalablement à l'étape de traitement par homogénéisation à haute pression, de préférence après sa dispersion dans le véhicule aqueux. Une telle caractéristique améliore avantageusement le rendement d'extraction des protéines allergènes contenues dans la matrice, notamment dans les cas où la matrice est initialement constituée de graines ou de grains entiers de diamètre relativement élevé.

Préférentiellement, ce broyage est réalisé de sorte à obtenir une granulométrie de la matrice solide inférieure à 1 500 µm, en diamètre des particules qui la composent.

A cet effet, il peut notamment être mis en oeuvre un mélangeur à rotor, classique en lui-même, qui permet, grâce à des forces de cisaillement, de réduire la granulométrie de la matrice solide et de disperser grossièrement les particules solides dans le véhicule aqueux.

Le broyage peut être réalisé à une température comprise entre 15 et 90 °C, de préférence environ égale à 25 °C. La vitesse du rotor peut être réglée à une valeur comprise entre 100 et 10 000 tours/minute, de préférence à environ 800 tours/minute. La durée de broyage peut être comprise entre 2 et 60 minutes, et est préférentiellement d'environ 10 minutes.

Dans des modes de mise en oeuvre particuliers de l'invention, la dispersion de matrice alimentaire solide dans le véhicule aqueux comprend un rapport en poids de matrice alimentaire solide, par volume de véhicule aqueux, compris entre 50/50 et 5/95, et de préférence égal à 20/80.

Le véhicule aqueux est préférentiellement l'eau. L'étape de traitement par homogénéisation à haute pression est réalisée à une pression comprise entre 200 et 1 000 bars, préférentiellement à environ 500 bars.

L'homogénéisation à haute pression est réalisée à une température comprise entre 15 et 90 °C, préférentiellement à environ 35 °C.

Dans des modes de mise en oeuvre préférés de l'invention, l'étape de traitement par homogénéisation à haute pression est réalisée de sorte à obtenir une granulométrie de l'homogénéisât inférieure à 20 µm, de préférence environ égale à 10 µm, en diamètre des particules qui le composent. L'obtention d'une telle granulométrie est avantageusement associée à un rendement optimal d'extraction des protéines allergènes de la matrice. Elle est en outre compatible avec les homogénéisateurs à haute pression couramment proposés sur le marché.

Un seul cycle d'homogénéisation à haute pression suffit généralement à obtenir un rendement d'extraction des protéines allergènes de la matrice alimentaire solide supérieur à 95 %, quel que soit l'état initial de ces protéines dans la matrice.

On obtient à l'issue de cette étape d'homogénéisation à haute pression une dispersion exempte de toute particule décelable à l'oeil nu, qui conserve la saveur initiale de la matrice alimentaire solide de départ.

Dans des modes de mise en oeuvre préférés de l'invention, l'étape de traitement par homogénéisation à haute pression est suivie d'une étape de traitement de l'homogénéisât obtenu par un agent de dégradation/dénaturation des protéines, pour dégrader les protéines allergènes contenues dans l'homogénéisât et diminuer ainsi leur allergénicité, de préférence d'au moins 70 %, préférentiellement d'au moins 90 %, et préférentiellement encore d'au moins 95 %.

L'agent de dégradation des protéines peut être un agent chimique ou biologique, notamment un agent protéolytique, pouvant être issu d'un micro-organisme, et en particulier une protéase. Les agents biologiques sont notamment particulièrement préférés dans le cadre de l'invention.

L'agent de dégradation des protéines peut être un micro-organisme, dont l'activité enzymatique, protéolytique en particulier, peut être supérieure à celles des enzymes isolées, et de préférence un micro-organisme probiotique. Par le terme probiotique, on entend désigner des microorganismes vivants qui, lorsqu'ils sont intégrés en quantité suffisante, exercent un effet positif sur la santé, au-delà des effets nutritionnels normaux.

On évite ainsi avantageusement le recours à des agents ou solvants chimiques, pour cette étape de la préparation de l'aliment hypoallergénique.

Les micro-organismes sélectionnés selon l'invention peuvent être des bactéries ou des champignons, unicellulaires tels que les levures ou pluricellulaires.

Préférentiellement, ils sont choisis de sorte à présenter des propriétés organoleptiques telles qu'ils n'altèrent pas les qualités gustatives initiales de l'homogénéisât.

Des exemples d'espèces de bactéries pouvant être mis en oeuvre dans le cadre de l'invention sont *Lactobacillus plantarum* et *Bacillus subtilis.* Des exemples de champignons sont *Saccharomyces cerevisiae, Rhizopus oligosporus* et *Aspergillus oryzae.*

Un ou plusieurs micro-organismes d'espèces ou de genres différents peuvent être mis en oeuvre simultanément ou consécutivement.

Dans des modes de mise en oeuvre préférés de l'invention, le micro-organisme est inoculé dans l'homogénéisât, et le milieu ainsi obtenu est laissé fermenter pendant une durée suffisante pour diminuer d'au moins 70 %, de préférence d'au moins 90 %, l'allergénicité des protéines allergènes contenues initialement dans l'homogénéisât.

La quantité initiale de micro-organismes utilisée pour l'inoculation et les conditions de fermentation sont notamment déterminées en fonction de la matrice alimentaire solide de départ et des protéines allergènes qu'elle renferme.

Préférentiellement, lorsque le micro-organisme est un champignon, l'inoculation est réalisée à raison de 1.10⁴ à 1.10⁸ spores par ml d'homogénéisât. Lorsque le micro-organisme est une bactérie, l'inoculation est par exemple réalisée au moyen d'une culture bactérienne de densité optique à 600 nm d'environ 0,5, qui est ajoutée dans l'homogénéisât dans une concentration de 10 à 70 % en volume, préférentiellement d'environ 50 % en volume. Un tel choix de conditions d'inoculation permet avantageusement d'obtenir la meilleure activité de dégradation des protéines allergènes contenues dans l'homogénéisât par le micro-organisme.

La fermentation peut être réalisée dans un système aéré, avec une agitation orbitale, sous une température comprise entre 20 et 45 °C, de préférence d'environ 37 °C, durant 2 à 300 heures, de préférence durant environ 72 heures.

Avant inoculation, l'homogénéisât est de préférence porté à une température supérieure ou égale à 100 °C, pendant 10 à 30 minutes, puis refroidi à la température ambiante.

Dans des modes de mise en oeuvre de l'invention, l'homogénéisât est additionné de sucre, par exemple de saccharose, glucose, maltose ; d'amidon, par exemple de blé, de maïs, de pomme de terre, dans une concentration comprise entre 0,5 et 10 % en poids/volume ; et/ou d'acide, tel que l'acide acétique, préalablement à la fermentation, de sorte à favoriser l'activité enzymatique, protéolytique en particulier, du micro-organisme.

Plus généralement, l'étape de traitement par un micro-organisme probiotique, en vue de diminuer l'allergénicité de protéines allergènes contenues dans une matrice solide, peut être réalisée sur toute forme de cette matrice solide, y compris sur des formes n'ayant pas été soumises à homogénéisation à haute pression, mais ayant été soumises à tout autre type de traitement préalable, ou à aucun tel traitement préalable. En particulier, cette étape de traitement par un micro-organisme probiotique peut être mise en oeuvre sur une dispersion de particules et protéines issues de la matrice solide, obtenue par une technique autre que l'homogénéisation à haute pression. Les caractéristiques de cette étape de traitement par un micro-organisme probiotique peuvent alors être telles que décrit ci-dessus.

Le fermentât obtenu à l'issue de la fermentation peut avantageusement être utilisé en tant qu'aliment en tant que tel, ou comme intermédiaire pour la fabrication d'un aliment.

Par exemple, dans le cas où la matrice alimentaire solide initiale est constituée à base d'arachide, le fermentât peut, après déshydratation éventuelle, être incorporé dans de l'huile d'arachide, notamment raffinée, qui ne présente pas en elle-même de caractère allergénique, pour la préparation de beurre de cacahuète.

L'aliment final présente une allergénicité fortement réduite par rapport à la matrice alimentaire solide initiale, cette réduction pouvant être jusqu'à supérieure à 95 %. Ses qualités gustatives, organoleptiques et nutritionnelles sont similaires à celles de cette matrice.

Le procédé selon l'invention constitue une avancée majeure dans la gestion quotidienne des évictions alimentaires imposées aux individus allergiques et aux problèmes qui leur sont liés, en particulier concernant l'étiquetage des produits alimentaires.

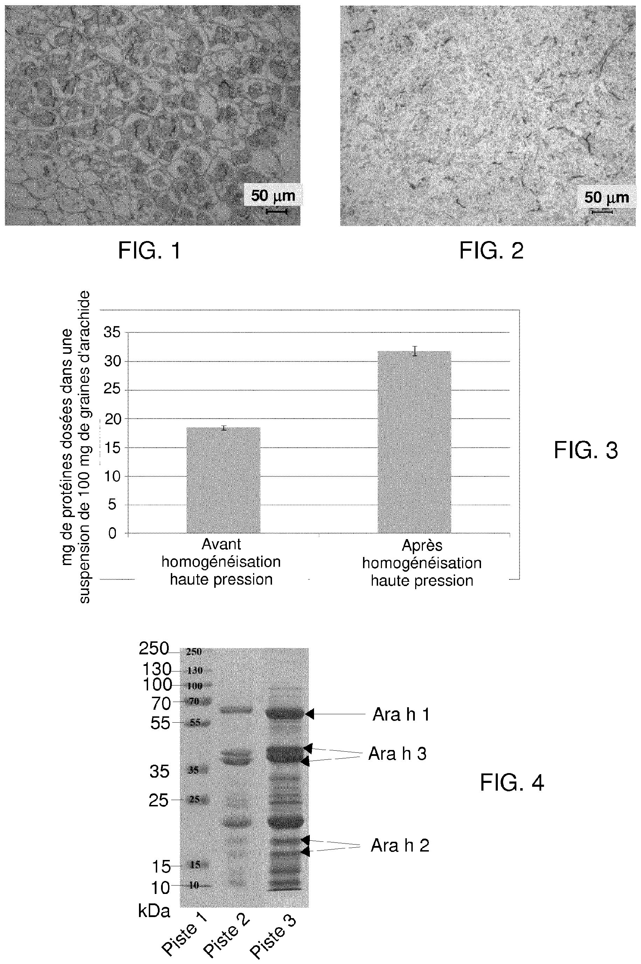

Les caractéristiques et avantages du procédé selon l'invention apparaîtront plus clairement à la lumière des exemples de mise en oeuvre ci-après, fournis à simple titre illustratif et nullement limitatifs de l'invention, avec l'appui des figures 1 à 10, dans lesquelles :
- la figure 1 représente une micrographie à un grossissement de 20x de particules obtenues par un broyage de graines d'arachide crues conforme à des modes de mise en oeuvre particuliers de l'invention ;
- la figure 2 montre une micrographie à un grossissement de 20x de particules d'un homogénéisât obtenu à partir de graines d'arachide crues selon un mode de mise en oeuvre particulier du procédé selon l'invention ;
- la figure 3 est un histogramme montrant la masse en mg de protéines dosées dans une suspension de 100 mg de graines d'arachide crues, respectivement avant et après une étape d'homogénéisation selon un mode de mise en oeuvre particulier de l'invention ;
- la figure 4 montre un gel SDS-PAGE (de l'anglais Sodium Dodecyl Sulfate-PolyAcrylamide Gel Electrophoresis) coloré au Bleu de Coomassie, obtenu après migration de, Piste 1 un marqueur de poids moléculaire, Piste 2 un extrait de suspension de graines d'arachide après broyage et avant homogénéisation à haute pression, et Piste 3 un extrait de suspension de graines d'arachide après homogénéisation à haute pression conformément à des modes de mise en oeuvre particuliers de l'invention ;

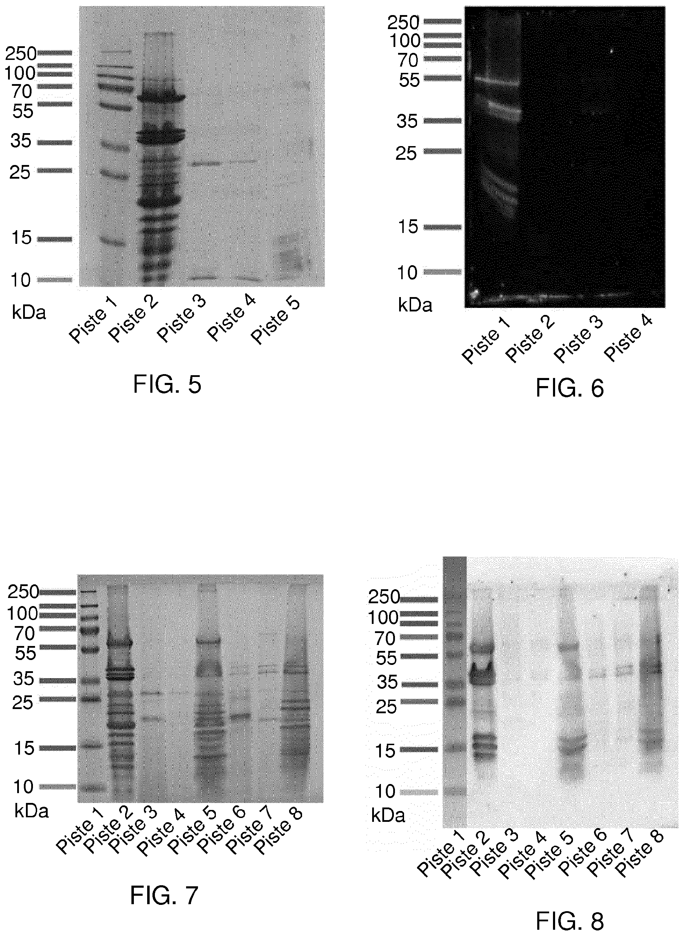

- la figure 5 montre un gel SDS-PAGE coloré au Bleu de Coomassie, obtenu après migration de, Piste 1 un marqueur de poids moléculaire ; Piste 2 un extrait protéique brut de graines d'arachide crues non traitées ; Pistes 3 à 5, des extraits de protéines obtenus à partir de graines d'arachide crues par des étapes de broyage, homogénéisation à haute pression puis 72 heures de fermentation par *Rhizopus oligosporus,* selon un mode de mise en oeuvre particulier du procédé selon l'invention, fraction Surnageant pour la Piste 3, Fraction soluble pour la Piste 4 et Fraction insoluble pour la Piste 5 (dépôt de 20 µg de protéines par puits) ;
- la figure 6 représente un gel SDS-PAGE suivi d'un Western blot obtenu après migration de, Piste 1 un extrait protéique brut de graines d'arachide crues non traitées ; Pistes 2 à 4, des extraits de protéines obtenus à partir de graines d'arachide crues par des étapes de broyage, homogénéisation à haute pression puis 72 heures de fermentation par *Rhizopus oligosporus,* selon un mode de mise en oeuvre particulier du procédé selon l'invention, fraction Surnageant pour la Piste 2, Fraction soluble pour la Piste 3 et Fraction insoluble pour la Piste 4 (dépôt de 20 µg de protéines par puits, pool d'anticorps de lapin anti-Ara h 1, anti-Ara h 2, anti-Ara h 3) ; le marqueur de poids moléculaire est représenté à gauche sur la figure ;
- la figure 7 montre un gel SDS-PAGE coloré au Bleu de Coomassie, obtenu après migration de, Piste 1 un marqueur de poids moléculaire ; Piste 2 un extrait protéique brut de graines d'arachide crues non traitées ; Pistes 3 à 5, des extraits de protéines obtenus à partir de graines d'arachide crues par des étapes de broyage, homogénéisation à haute pression puis 72 heures de fermentation par *Aspergillus oryzae,* selon un mode de mise en oeuvre particulier du procédé selon l'invention, fraction Surnageant pour la Piste 3, Fraction soluble pour la Piste 4 et Fraction insoluble pour la Piste 5 ; Pistes 6 à 8, des extraits de protéines obtenus à partir de graines d'arachide grillées par des étapes de broyage, homogénéisation à haute pression puis 72 heures de fermentation par *Aspergillus oryzae,* selon le même mode de mise en oeuvre du procédé selon l'invention, fraction Surnageant pour la Piste 6, Fraction soluble pour la Piste 7 et Fraction insoluble pour la Piste 8 (dépôt de 20 µg de protéines par puits) ;
- la figure 8 représente un gel SDS-PAGE suivi d'un Western blot obtenu après migration de, Piste 1 un marqueur de poids moléculaire ; Piste 2 un extrait protéique brut de graines d'arachide crues non traitées ; Pistes 3 à 5, des extraits de protéines obtenus à partir de graines d'arachide crues par des étapes de broyage, homogénéisation à ultra haute pression puis 72 heures de fermentation par *Aspergillus oryzae,* selon un mode de mise en oeuvre particulier du procédé selon l'invention, fraction Surnageant pour la Piste 3, Fraction soluble pour la Piste 4 et Fraction insoluble pour la Piste 5 ; Pistes 6 à 8, des extraits de protéines obtenus à partir de graines d'arachide grillées par des étapes de broyage, homogénéisation à ultra haute pression puis 72 heures de fermentation par *Aspergillus oryzae,* selon le même mode de mise en oeuvre du procédé selon l'invention, fraction Surnageant pour la Piste 6, Fraction soluble pour la Piste 7 et Fraction insoluble pour la Piste 8 (dépôt de 20 µg de protéines par puits, pool d'anticorps de lapin anti-Ara h 1, anti-Ara h 2, anti-Ara h 3) ;

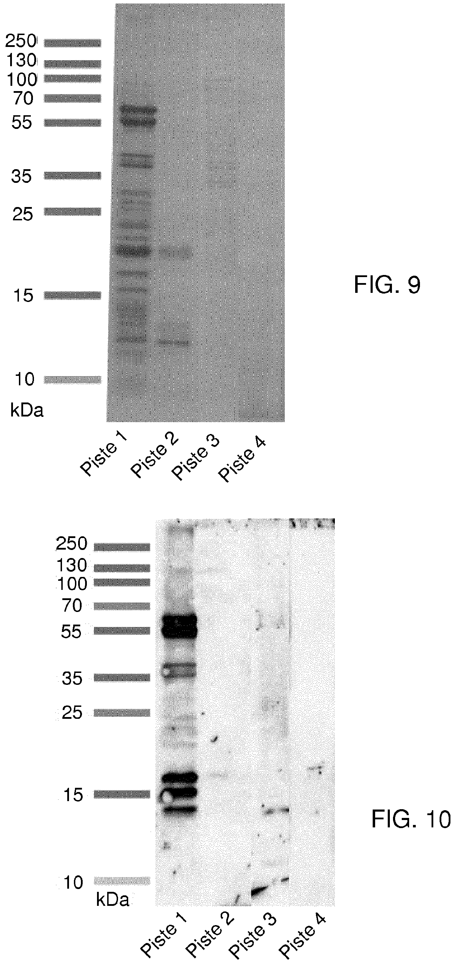

- la figure 9 montre un gel SDS-PAGE coloré au Bleu de Coomassie, obtenu après migration de, Piste 1, un extrait protéique brut de graines d'arachide crues non traitées ; Pistes 2 à 4, des extraits de protéines obtenus à partir de graines d'arachide crues par des étapes de broyage, homogénéisation à haute pression puis 72 heures de fermentation par *Bacillus subtilis,* selon un mode de mise en oeuvre particulier du procédé selon l'invention, fraction Surnageant pour la Piste 2, Fraction soluble pour la Piste 3 et Fraction insoluble pour la Piste 4 (dépôt de 20 µg de protéines par puits) ; le marqueur de poids moléculaire est représenté à gauche sur la figure ;
- et la figure 10 représente un gel SDS-PAGE suivi d'un Western blot obtenu après migration de, Piste 1 un extrait protéique brut de graines d'arachide crues non traitées ; Pistes 2 à 4, des extraits de protéines obtenus à partir de graines d'arachide crues par des étapes de broyage, homogénéisation à ultra haute pression puis 72 heures de fermentation par *Bacillus subtilis,* selon un mode de mise en oeuvre particulier du procédé selon l'invention, fraction Surnageant pour la Piste 2, Fraction soluble pour la Piste 3 et Fraction insoluble pour la Piste 4 (dépôt de 20 µg de protéines par puits, pool d'anticorps de lapin anti-Ara h 1, anti-Ara h 2, anti-Ara h 3) ; le marqueur de poids moléculaire est représenté à gauche sur la figure.

### EXEMPLE A - Traitement d'une matrice alimentaire solide constituée de graines brutes d'arachide par homogénéisation à haute pression

### 1/ Matériels et méthodes

On utilise pour le broyage initial de la matrice un mélangeur à immersion à haut cisaillement Silverson®. La vitesse du rotor est fixée à 700 tours/minute, la durée de traitement à 5 minutes. La température est de 25 °C environ.

L'homogénéisation à haute pression est réalisée au moyen d'un homogénéisateur haute pression Lab-1000 de la société APV, à une pression de 500 bars, et à une température de 35 °C.

L'analyse microscopique est réalisée sur une dispersion de la matrice alimentaire solide, respectivement après broyage et après homogénéisation à haute pression. A cet effet, 10 µL de la dispersion sont déposés sur une lame en verre et séchés à une température de 60 °C pendant 10 minutes. Cela permet aux solides résiduels d'adhérer à la lame de verre et de pouvoir procéder à une coloration. Les lames sont alors plongées dans une solution d'acridine orange à 1 % (m/v) pendant 5 minutes à température ambiante. Après lavage à l'eau distillée, les lames sont plongées dans une solution de rouge Congo à 1 % (m/v) pendant 5 minutes, puis rincées intensivement à l'eau distillée. Les lames sont alors plongées dans une solution de vert lumière à 1 % (m/v) pendant 2 minutes puis rincées à l'eau distillée. L'observation est ensuite réalisée au microscope avec un grossissement de 20x, au moyen d'un microscope Leica DM IRBE inversé à champ large et fond clair. La coloration permet d'identifier les différents composants de la dispersion : l'amidon est coloré en violet, les protéines en vert/bleu (visible en gris foncé sur les figures 1 et 2) et les parois cellulaires en marron/orange.

Le dosage des protéines présentes dans la dispersion est réalisé avant et après le traitement par homogénéisation à haute pression. A cet effet, à 980 µL de la dispersion (à des rapports masse/volume identiques) sont ajoutés 20 µL d'une solution tampon de Tris(2-amino-2-hydroxyméthyl-1,3-propanediol) à 1 mol/L à un pH de 8,5, dans un tube Eppendorf de 1,5 mL. Les suspensions sont ensuite agitées sur un agitateur orbital à température ambiante pendant 1 h. Les tubes sont centrifugés à 4 °C à une vitesse de 16 100 g pendant 10 minutes, et le surnageant est prélevé. Ce surnageant est dilué au 10^{ème} dans de l'eau ultra pure, et le dosage des protéines est effectué à l'aide du kit de dosage de protéines BCA (pour l'anglais Bi-Cinchoninic Acid, acide bicinchoninique) de Pierce, sur une microplaque à fond plat de 96 puits. La gamme étalon est une solution de BSA (pour l'anglais Bovine Sérum Albumin, albumine de sérum bovin) dans des concentrations allant de 2 mg/mL à 0 mg/mL. Après incubation de la solution protéique (25 µL après dilution) et du réactif du kit (200 µL) pendant 30 minutes à 37 °C, la microplaque est lue sur un lecteur spectrophotométrique à une longueur d'onde de 562 nm. Les concentrations en protéines sont calculées à partir de la gamme étalon.

La séparation des protéines sur gel est réalisée sur gel de polyacrylamide en conditions dénaturantes (SDS-PAGE). Les électrophorèses sont réalisées dans des gels plans de porosité 12,5 % d'acrylamide. Ce maillage permet de bien séparer les protéines de poids moléculaires moyens et faibles (entre 100 et 10 kDa).

Les gels sont constitués d'un gel de séparation (acrylamide 12,5 % ; bis-acrylamide 0,4 % ; Tris-HCl 0,125 mol/L pH 8,8 ; sodium dodécyl sulfate (SDS) 0,1 %) et d'un gel de concentration (acrylamide 4,8 % ; bis-acrylamide 0,3 % ; Tris-HCl 0,375 mol/L pH 6,8 ; SDS 0,1 %). La migration se déroule à un ampérage constant de 30 mA pendant environ 1 heure.

Les solutions protéiques sont déposées à volume constant : 1 µL + 19 µL d'eau ultra pure + 4 µL d'une solution de tampon de charge [2 % SDS ; 0,125 M Tris ; 10 % glycérol ; 5 % β-mercaptoéthanol] et chauffées 5 minutes à 100 °C avant d'être déposées sur le gel.

Les protéines séparées sur gels sont ensuite colorées selon le protocole suivant: fixation dans une solution de 40 % éthanol, 10 % acide acétique et 50 % H₂O pendant 30 minutes ; coloration dans une solution de Bleu de Coomassie (1 g de bleu de Coomassie R250, 250 mL éthanol, 80 mL acide acétique, 670 mL H₂O) ; décoloration dans une solution de 25 % éthanol, 8 % acide acétique, 67 % H₂O, jusqu'à ce que le fond du gel soit clair.

### 2/ Résultats

Des graines d'arachide brutes sont mises en suspension dans l'eau, dans un rapport en poids de graines par volume d'eau égal à 20/80.

Cette suspension est soumise à broyage, selon la méthode indiquée ci-dessus. On obtient à l'issue de cette étape une suspension dans l'eau de particules de graine d'arachide.

Cette suspension est soumise à analyse microscopique, selon la méthode indiquée ci-dessus. Après coloration, on obtient la micrographie représentée sur la figure 1. On y observe que toutes les particules solides présentent un diamètre inférieur à 1 500 µm.

La suspension obtenue est soumise à homogénéisation à haute pression, selon la méthode indiquée ci-dessus (passage unique dans l'homogénéisateur).

L'homogénéisât obtenu est soumis à analyse microscopique, selon la méthode indiquée ci-dessus. Après coloration, on obtient la micrographie représentée sur la figure 2. On y observe clairement une désagrégation des corps protéiques, par rapport à la suspension avant homogénéisation faisant l'objet de la figure 1. La grande majorité des protéines allergènes de l'arachide, en particulier Ara h 1, Ara h 2, Ara h 3/4, Ara h 5, Ara h 6, Ara h 8 et Ara h 9, étant contenues dans ces corps protéiques, on peut en déduire que l'homogénéisation à haute pression a conduit à la dispersion de ces protéines dans le véhicule aqueux.

Un dosage de protéines contenues dans la suspension, avant et après homogénéisation, a été réalisé conformément à la méthode décrite ci-dessus. Le résultat, en masse de protéines dosées dans une suspension de 100 mg de graines d'arachide, est montré sur la figure 3.

On y observe qu'après homogénéisation, pour la même quantité en poids initiale de graine d'arachide, on dose une quantité de protéines dans la suspension qui est de 42 % plus élevée qu'avant homogénéisation à haute pression. Ce résultat démontre clairement que l'homogénéisation à haute pression conduit à une solubilisation importante des protéines initialement contenues dans les particules du broyat de graines d'arachide.

Les protéines contenues dans la suspension, respectivement après broyage et avant homogénéisation, et après homogénéisation à haute pression, ont été séparées sur gel de polyacrylamide SDS-PAGE, selon la méthode indiquée ci-dessus. Après coloration, on obtient le gel montré sur la figure 4. Sur ce gel, la Piste 1 correspond à un marqueur de poids moléculaire, la Piste 2 aux protéines de la suspension avant homogénéisation et la Piste 3 aux protéines de la suspension après homogénéisation à haute pression. Sur cette figure, on a indiqué par des flèches les bandes attribuées aux allergènes majeurs de l'arachide, c'est-à-dire Ara h 1 (de poids moléculaire d'environ 63 kDa), Ara h 3 (sous-unité acide, doublet à des poids moléculaires d'environ 42 et 45 kDa) et Ara h 2 (doublet à des poids moléculaires d'environ 16 et 17 kDa).

On observe sur cette figure 4 que, pour des conditions opératoires identiques, l'intensité des bandes qui correspondant aux allergènes majeurs de l'arachide, Ara h 1, Ara h 2 et Ara h 3, est nettement plus prononcée pour l'extrait protéique obtenu après homogénéisation à haute pression, que pour celui obtenu à partir du broyat avant l'homogénéisation. On note également la présence, sur la Piste 3, de bandes entre 35 et 20 kDa, entre 55 et 45 kDa et au-delà de 70 kDa, qui ne sont pas visibles sur la Piste 2. On peut en déduire que l'homogénéisation à haute pression a permis de libérer dans le véhicule aqueux une quantité importante de protéines, et en particulier des allergènes majeurs de l'arachide Ara h 1, Ara h 2 et Ara h 3.

L'homogénéisation à haute pression a donc permis d'améliorer de manière significative la disponibilité et le degré de solvatation des protéines de réserve contenues dans les graines d'arachide, et d'augmenter par là-même leur susceptibilité à subir ultérieurement un traitement, notamment biologique, visant à leur dénaturation ou leur dégradation.

### EXEMPLE B - Préparation d'anticorps dirigés contre les protéines allergènes Ara h 1, Ara h 2 et Ara h 3 de l'arachide

Afin de quantifier la teneur en allergènes majeurs de l'homogénéisât obtenu dans l'Exemple A, on prépare des anticorps dirigés contre les protéines allergènes Ara h 1, Ara h 2 et Ara h 3 de l'arachide de la façon suivante.

### 1/ Purification de la protéine Ara h 1

Des graines d'arachide crues sont dispersées dans du tampon Tris 20 mM de pH 7,4. L'extrait brut ainsi obtenu est soumis à précipitation dans une solution aqueuse de sulfate d'ammonium ((NH₄)₂SO₄) à 40 % (m/v). Le surnageant est soumis à dialyse contre un tampon phosphate 20 mM de pH 7, à travers une membrane de limite d'exclusion 3,5 kDa.

On obtient un extrait de protéines contenant majoritairement Ara h 1, auquel sont ajoutés 2 % en volume de polyvinylpolypyrrolidone (PVPP).

La protéine Ara h 1 est ensuite purifiée au moyen d'une colonne de sépharose à laquelle est greffée de la concanavaline A. Cette lectine permet la fixation des motifs glucidiques, ces mêmes motifs se trouvant sur la protéine Ara h 1. La fixation s'effectue dans un tampon Tris 20 mmol.L⁻¹, pH 7,4, additionné de 0,5 mol.L⁻¹ de NaCl, 1 mmol.L⁻¹ de MnCl₂ et CaCl₂. L'élution se fait dans le même tampon, additionné de 200 mmol.L⁻¹ de glucose.

La concanavaline A résiduelle se trouve dans les fractions récupérées. Afin de l'éliminer et d'augmenter la pureté d'Ara h 1, les fractions sont réunies et dialysées pendant 48 h contre du tampon Tris 20 mmol.L⁻¹ de pH 7,4, afin d'éliminer dans un premier temps le glucose qui empêche la fixation de la Concanavaline A sur le dextran.

Ensuite, les échantillons sont passés sur une colonne Sephadex G-25 en circuit fermé pendant 24 h à 4 °C, à un débit de 0,5 mL/min. La concanavaline A se fixe sur les motifs dextran, et l'éluat contient exclusivement Ara h 1.

L'identité de cette protéine et son état de pureté sont vérifiées par SDS-PAGE et caractérisation des fractions peptidiques obtenues après hydrolyse trypsique par spectrométrie de masse au moyen d'un spectromètre de type MALDI-TOF.

### 2/ Purification de la protéine Ara h 2

Des graines d'arachide crues sont dispersées dans du tampon Tris 20 mM de pH 7,4, additionné de chlorure de sodium (NaCl) 150 mM. L'extrait brut ainsi obtenu est soumis à une délipidation au chloroforme, puis l'extrait brut ainsi délipidé est soumis à dialyse contre un tampon Tris 20 mM de pH 8, à travers une membrane de limite d'exclusion 3,5 kDa.

On obtient un extrait de protéines contenant majoritairement Ara h 2.

La protéine Ara h 2 est ensuite purifiée à partir de cet extrait sur une colonne HiTrap® Q FF (Amersham) de 5 mL, colonne anionique qui permet de séparer les protéines selon leur charge, à un pH légèrement basique.

La fixation se fait par interaction ionique, et l'élution par un gradient croissant de NaCl. La protéine Ara h 2 est éluée à une concentration en NaCl de 240 mmol.L⁻¹. Les fractions récupérées en sortie de colonne sont ensuite dialysées contre un tampon Tris 20 mmol.L⁻¹, pH 7,4.

L'identité de la protéine Ara h 2 et son état de pureté sont vérifiées par SDS-PAGE et caractérisation des fractions peptidiques obtenues après hydrolyse trypsique par spectrométrie de masse au moyen d'un spectromètre de type MALDI-TOF.

### 3/ Purification de la protéine Ara h 3

Des graines d'arachide crues sont délipidées par l'éther de pétrole dans un extracteur de Soxhlet, puis dispersées dans un tampon Tris 20 mM de pH 8.

On obtient un extrait de protéines contenant majoritairement Ara h 3.

La protéine Ara h 3 est ensuite purifiée à partir de cet extrait en deux étapes, sur deux colonnes distinctes.

La première colonne est celle décrite pour la purification d'Ara h 2 ci-dessus, c'est-à-dire une colonne anionique HiTrap® Q FF de 5 mL. Les conditions mises en oeuvre sont les même que pour la purification d'Ara h 2 ci-dessus, mis à part que l'élution d'Ara h 3 a lieu à une concentration en NaCl de 400 mmol.L⁻¹.

Suite à ce passage sur la première colonne, et après vérification par séparation des protéines en SDS-PAGE, les fractions contenant Ara h 3 sont réunies et dialysées contre un tampon Phosphate 50 mmol.L⁻¹ pH 7,0 pendant 48 h à 4 °C.

La séparation finale d'Ara h 3 des autres protéines éluées à 400 mmol.L⁻¹ NaCl sur HiTrap® Q FF 5 mL est réalisée par chromatographie sur une colonne HiTrap® Phenyl HP 5 mL (Amersham), chromatographie dite « hydrophobe ». Pour la fixation et l'élution des protéines sur ce type de colonne, on joue sur l'hydrophobicité des protéines, affectée par la concentration plus ou moins importante en sels chaotropiques ((NH₄)₂SO₄ par exemple). Pour cela, suite à la dialyse, on ajoute à l'échantillon une solution de (NH₄)₂SO₄ 2,5 mol.L⁻¹ afin d'obtenir une concentration finale de (NH₄)₂SO₄ de 1 mol.L⁻¹. L'échantillon est ensuite fixé sur la colonne HiTrap® Phenyl HP, et, après lavage, l'élution s'effectue avec un gradient décroissant en sel (NH₄)₂SO₄ dans du tampon Phosphate 50 mM pH 7,0.

Les protéines contenues dans les fractions récupérées sont ensuite précipitées par l'acide trichloroacétique et séparées sur gel SDS-PAGE afin de vérifier leur pureté.

L'identité de la protéine Ara h 3 et son état de pureté sont vérifiées par SDS-PAGE et caractérisation des fractions peptidiques obtenues après hydrolyse trypsique par spectrométrie de masse au moyen d'un spectromètre de type MALDI-TOF.

### 4/ Immunisation de lapins

Pour chacune des trois protéines allergènes purifiées, la production d'antigènes polyclonaux est réalisée par l'immunisation de deux lapins de Nouvelle-Zélande. Le programme d'immunisation s'étale sur 63 jours, avec 4 injections de 150 à 300 µg de protéines purifiées reprises dans de l'adjuvant complet de Freund. Trois prélèvements sont effectués afin de suivre la production des anticorps désirés : à J0 pour la vérification de la non-réactivité du sérum pré-immun, à J49 et à J63 pour le suivi de la réponse immunitaire et le choix de l'exsanguination totale ou non des lapins.

Après décision de l'exsanguination totale des lapins, ceux-ci sont sacrifiés dans une période ne dépassant pas 40 jours après le programme d'immunisation de 63 jours.

La spécificité et la sensibilité des sérums obtenus, pour la protéine allergène associée, est vérifiée par des analyses en Western blot, contre un extrait total d'arachide.

### EXEMPLE C - Traitement de l'homogénéisât de l'Exemple A par des micro-organismes

L'homogénéisât obtenu dans l'Exemple A est soumis à une fermentation respectivement par chacun des micro-organismes probiotiques suivants : *Aspergillus oryzae, Rhizopus oligosporus, Bacillus subtilis.*

A l'issue de cette fermentation, les protéines contenues dans l'homogénéisât ainsi obtenu sont extraites, dosées et séparées par SDS-PAGE. Elles sont ensuite analysées par Western blot et test ELISA (pour l'anglais Enzyme-Linked ImmunoSorbent Assay), afin d'évaluer leur degré d'allergénicité.

### 1/ Matériel et Méthodes

### Culture des micro-organismes

*Aspergillus oryzae* et *Rhizopus oligosporus* sont cultivés sur un milieu PDA (pour l'anglais Potato Dextrose Agar) (pour un litre : Potato infusion 4 g ; Dextrose 20 g, Agar 15 g - stérilisé à l'autoclave pendant 15 minutes à 121 °C/1 bar) sur boite de pétri à 37 °C, dans une atmosphère humide (95 % d'humidité relative) pendant 7 jours.

*Bacillus subtilis* est mis en culture dans un milieu CASO (Caséine SOja Trypsique) (pour un litre : peptone de caséine 17,0 g/L ; peptone de farine de soja 3,0 g/L ; D(+)- glucose 2,5 g/L ; chlorure de sodium 5,0 g/L ; phosphate dipotassique 2,5 g/L - stérilisé à l'autoclave pendant 15 minutes à 121 °C / 1 bar) à 37 °C pendant 12 heures.

### Mise en fermentation

10 mL d'homogénéisât sont traités, dans une fiole erlenmeyer de 100 mL.

Pour *Aspergillus oryzae* et *Rhizopus oligosporus,* le pH de l'homogénéisât est ajusté à 4,5 avec de l'acide acétique. Les spores cultivées sur boite de Pétri sont récoltées à l'aide d'eau stérile additionnée de quelques gouttes de Tween 20. Après décrochage des spores du milieu de culture à l'aide d'un râteau de verre, la suspension est filtrée sur du Miracloth afin de ne garder que les spores et de les séparer du mycélium. La suspension est soumise à un vortexage et directement dénombrée au microscope grâce à une cellule de dénombrement (cellule de Malassez). Les spores sont ajoutées à l'homogénéisât, à raison de 1.10⁶ spores/mL, puis le milieu résultant est soumis à chauffage à une température de 100 °C pendant 10 minutes, puis laissé refroidir jusqu'à la température ambiante. La culture est mise à fermenter dans un système aéré avec une agitation orbitale (à la vitesse de 50 tours/minute), sous une température de 37 °C, pendant 72 heures.

Les bactéries *Bacillus subtilis* sont mises en culture dans les milieux de culture correspondants jusqu'à obtenir une densité optique de 0,5 à 600 nm (12 heures à 37 °C). L'homogénéisât est chauffé à 100 °C pendant 10 minutes puis refroidi à température ambiante. Il est en outre additionné de maltose à 2 % (m/v). Les bactéries sont inoculées dans l'homogénéisât à une concentration de 50 % (v/v). La culture est ensuite mise à fermenter sans agitation, à une température de 37 °C, pendant 72 heures.

### Extraction des protéines après fermentation de l'homogénéisât

Après un temps de fermentation donné, 1,5 mL du fermentât obtenu sont disposés dans un tube Eppendorf de 2 mL, et centrifugés à 16 100 x g pendant 10 minutes à 4 °C. La couche lipidique supérieure est éliminée et le surnageant est prélevé et stocké à -20 °C jusqu'à analyse. Il est désigné ci-après par le terme « Surnageant ».

Le culot est re-suspendu dans 1 mL de tampon Tris 20 mM, pH 8,5 et la solution est soumise à agitation pendant 1 h à température ambiante sur une roue d'agitation, à raison de 20 rotations par minute. La solution est ensuite centrifugée à 16 100 x g pendant 10 minutes à 4 °C. Le surnageant est prélevé et stocké à -20 °C jusqu'à analyse. Il est désigné ci-après par l'expression « Fraction soluble ».

Le culot est alors re-suspendu dans 1 mL d'un tampon dénaturant (500 µL Tris 1,25 M, pH 6,5 ; 500 µL glycérol ; 500 µL SDS 20 % ; 25 µL dithiothréitol 1 M ; 3 475 µL H₂O) afin de solubiliser les protéines qui auraient pu s'agréger lors d'une quelconque étape de traitement antérieur. La solution est chauffée pendant 5 minutes à 100 °C, et centrifugée à 16 100 x g pendant 10 minutes à 4 °C. Le surnageant est prélevé et stocké à -20 °C jusqu'à analyse. Il est désigné ci-après par l'expression « Fraction insoluble ».

L'arachide crue non traitée est soumise aux mêmes étapes d'extraction des protéines.

### Dosage des protéines

Les différentes fractions extraites (Surnageant, Fraction soluble et Fraction insoluble) sont soumises à un dosage protéique.

Le Surnageant et la Fraction soluble sont dilués au 10^{ème} dans de l'eau ultra-pure. La Fraction insoluble est diluée au 10^{ème} dans une solution d'iodoacétamide 50 mM et chauffée à 37 °C pendant 15 minutes (ce qui permet d'oxyder le dithiothréitol et de ne pas interférer avec les réactifs du dosage BCA). Le dosage des protéines est effectué à l'aide du kit BCA de Pierce, sur une microplaque à fond plat de 96 puits. La gamme étalon est une solution de BSA allant de 0 mg/mL à 2 mg/mL.

Après incubation de la solution protéique (25 µL après dilution) et du réactif de Pierce (200 µL) pendant 30 minutes à 37 °C, l'absorbance est lue au moyen d'un lecteur spectrophotométrique à une longueur d'onde de 562 nm.

Les concentrations en protéines pour les différentes fractions obtenues sont calculées à partir de la gamme étalon.

### Séparation des protéines sur gel

Les protéines extraites préalablement sont séparées sur des gels de polyacrylamide en conditions dénaturantes. Les gels sont constitués selon les compositions indiquées dans l'Exemple A ci-dessus.

Les solutions protéiques sont déposées à concentrations égales (20 µg par puits) et les dilutions sont calculées à partir du dosage au BCA. Les dilutions sont ramenées à un volume de 20 µL, avec l'eau comme diluant. Pour les fractions Surnageant et Fraction soluble, à ces 20 µL sont ajoutés 4 µL d'une solution de tampon de charge (2 % SDS ; 0,125 M Tris ; 10 % glycérol ; 5 % β-mercaptoéthanol, quelques cristaux de bleu de bromophénol) et chauffées 5 minutes à 100 °C avant d'être déposées sur le gel. Pour les Fractions insolubles, à ces 20 µL sont ajoutés 4 µL d'une solution (0,125 M Tris ; 10 % glycérol, quelques cristaux de bleu de bromophénol) et directement déposées sur le gel.

Les protéines séparées sur gels sont ensuite colorées selon le protocole indiqué dans l'Exemple A ci-dessus.

### Western blot des fractions protéiques après fermentation

Pour toutes les fractions (Surnageant, Fraction soluble et Fraction insoluble), après migration des protéines sur gel d'électrophorèse SDS-PAGE comme indiqué ci-dessus, le gel n'est pas coloré, et les protéines sont électrotransférées depuis ce gel sur une membrane de nitrocellulose en mode semi-sec, dans un tampon de transfert (Tris 48 mM, glycine 39 mM, méthanol 20 % (v/v)) à 20 volts pendant 20 minutes (TransBlot® Turbo®, Biorad®). La membrane est ensuite colorée dans une solution contenant 0,2 % de rouge Ponceau afin de vérifier l'efficacité du transfert. Après décoloration dans du tampon phosphate salin (PBS) 1 x (pour 1 litre: 8 g NaCl, 0,2 g KCl, 1,44 g Na₂HPO₄, 0,24 g KH₂PO₄, pH 7,4). Les sites de fixation potentiels non utilisés sur la membrane sont saturés par une solution de tampon PBS additionnée de 5 % (m/v) de lait écrémé en poudre, pendant une nuit à 4 °C.

La membrane est ensuite exposée à un anticorps primaire spécifique de la protéine d'intérêt, obtenu dans l'Exemple B : l'anticorps primaire (pool de sérums de lapin : Anti-Ara h 1 dilué au 1:40 000, Anti-Ara h 2 dilué au 1:5 000, Anti-Ara h 3 dilué au 1:10 000, dilutions dans le tampon de saturation) est déposé sur la membrane pendant 2 heures en chambre humide à température ambiante. La membrane est ensuite lavée 3 fois 10 minutes dans le tampon de saturation sous agitation (PBS, 5 % (m/v) lait écrémé, 0,1 % Tween 20 (v/v)) puis incubée pendant 1 heure avec un anticorps secondaire (anti-IgG de lapin) couplé à la peroxydase de raifort (dilué au 1:2000 dans la solution de saturation).

Après 2 lavages dans du PBS, 0,1 % Tween 20, et deux lavages dans du PBS seul, les membranes sont incubées avec un substrat générant une réaction chimioluminescente ECL Plus® (Amersham) pendant 1 minute, et le signal chimioluminescent obtenu est enregistré avec une caméra.

### Test ELISA

Le test ELISA permet de quantifier les allergènes résiduels après la fermentation par les microorganismes, dans chacune des fractions Surnageant, Fraction Soluble et Fraction insoluble. Ce test est réalisé en triplicat.

Tous les échantillons sont dilués dans du PBS. Des dilutions des différents extraits (Surnageant, Fraction soluble et Fraction insoluble), ainsi qu'un extrait brut d'arachide non traitée (témoin) sont déposés dans une plaque 96 puits, à raison de 50 µL par puits, et à différentes concentrations comprises entre 0 et 100 ng/µL pour la détection par l'anticorps anti-Ara h 1, 0 et 250 ng/µL pour anti-Ara h 2 et anti-Ara h 3 en ce qui concerne les fractions Surnageant et Fraction soluble, et entre 0 et 600 ng/µL pour la Fraction insoluble, quel que soit l'anticorps utilisé pour la détection.

Après ce premier dépôt, la plaque est mise à incuber à 4 °C pendant une nuit. Après incubation, la plaque est lavée trois fois (200 µL/puits) avec du PBS. Les puits sont ensuite mis à saturer avec une solution PBS, BSA 1 % (w/v) et Tween 0,1 % (v/v) (100 µL par puits), pendant une heure à température ambiante. Les plaques sont retournées et les puits vidés, et les différents sérums sont alors incubés (anti-Ara h 1 dilué au 1:10 000 , anti-Ara h 2 dilué au 1:5 000, anti-Ara h 3 dilué au 1:10 000 dans du PBS/Tween/BSA) pendant 2 h à température ambiante, sous agitation (50 µL/puits). Les plaques sont ensuite retournées et les puits vidés et lavés 3 fois avec une solution PBS/Tween/BSA (200 µL/puits).

L'anticorps secondaire (anti-IgG de lapin couplé à la phosphatase alcaline) est ensuite ajouté, à raison de 50 µL par puits après dilution au 1:2 000 dans du PBS/Tween/BSA, et la plaque est mise à incuber pendant 1 heure à température ambiante. Les puits sont ensuite rincés trois fois avec du PBS/Tween/BSA (200 µL par puits). Le substrat ajouté est du 4-nitrophényl phosphate (pNPP, Sigma), à raison de 100 µL par puits. La plaque est mise à incuber à température ambiante pendant 30 minutes à l'obscurité sous agitation. L'absorbance est ensuite lue à 450 nm dans un spectrophotomètre pour microplaques.

### 2/ Résultats

### 2.1/ Fermentation par Rhizopus oligosporus

Après 72 heures de fermentation par *Rhizopus oligosporus,* et extraction protéique, suivant le protocole indiqué ci-dessus, les protéines de chaque fraction obtenue (Surnageant, Fraction soluble et Fraction insoluble) sont séparées par électrophorèse SDS-PAGE. Le témoin utilisé est un extrait protéique de graines d'arachide crues.

Le gel obtenu après coloration est montré sur la figure 5.

On y observe que pour toutes les fractions protéiques obtenues après fermentation de l'homogénéisât (Pistes 3 à 5), par rapport à l'extrait brut de graines d'arachide non traitées (Piste 2), les bandes correspondant aux allergènes majeurs de l'arachide (environ 63 kDa pour Ara h, environ 42 et 45 kDa pour Ara h 3 et environ 16 et 17 kDa pour Ara h 2) ont disparu. Ces protéines ne sont plus présentes dans le fermentât obtenu.

Le résultat de l'analyse par Western blot de ces mêmes fractions est montré sur la figure 6. On n'y observe, pour tous les extraits obtenus après traitement par fermentation (Pistes 2 à 4), aucune bande témoin de la liaison de protéines à l'un quelconque des trois anticorps anti-Ara h 1, anti-Ara h 2 ou anti-Ara h 3.

Les résultats obtenus par dosage ELISA, pour chacun des anticorps anti-Ara h 1, anti-Ara h 2 ou anti-Ara h 3, après respectivement 24, 48 et 72 heures de fermentation, sont montrés dans le Tableau 1 ci-après.

**Tableau 1 - Teneur en Ara h 1, Ara h 2, Ara h 3 des extraits protéiques après fermentation de l'homogénéisât de l'Exemple A par Rhizopus oligosporus, déterminée par test ELISA**

| | Temps de fermentation | Ara h 1 A | % Ara h 1 | Ara h 2 A | % Ara h 2 | Ara h 3 A | % Ara h 3 |
|---|---|---|---|---|---|---|---|
| Surnageant | Non traité | 302,7 | | 337 | | 365 | |
| | 24h | 55 | -82% | 94 | -72% | 79 | -78% |
| | 48h | 17 | -94% | 58 | -83% | 46 | -87% |
| | 72h | 10 | -97% | 14 | -96% | 11 | -97% |
| Fraction soluble | Non traité | 602,67 | | 337 | | 365 | |
| | 24h | 90 | -85% | 85 | -75% | 92 | -75% |
| | 48h | 48 | -92% | 48 | -86% | 64 | -82% |
| | 72h | 18 | -97% | 13 | -96% | 16 | -96% |
| Fraction insoluble | Non traité | 121,33 | | 190 | | 183,33 | |
| | 24h | 78 | -36% | 74 | -61% | 92 | -50% |
| | 48h | 34 | -72% | 42 | -78% | 36 | -80% |
| | 72h | 5 | -96% | 9 | -95% | 8 | -96% |

### où A représente l'absorbance à 450 nm

Par rapport à l'extrait protéique obtenu à partir de graines d'arachide non traitées, on observe, dès après 24 h de fermentation, une diminution significative de la teneur en protéines allergènes majeures Ara h 1, Ara h 2, et Ara h 3. Pour toutes les fractions d'extraction, après 72 h de fermentation, cette diminution est supérieure ou égale à 95 % par rapport aux graines d'arachide non traitées.

L'ensemble des résultats ci-dessus montre clairement que le fermentât obtenu après broyage de graines d'arachide crues, homogénéisation à ultra haute pression et fermentation par *Rhizopus oligosporus,* conformément à un mode de mise en oeuvre particulier du procédé selon l'invention, présente un degré d'allergénicité fortement réduit par rapport à l'arachide crue non traitée de départ. Les principales protéines allergènes de l'arachide, Ara h 1, Ara h 2, et Ara h 3, ont été efficacement extraites de la matrice solide initiale par l'homogénéisation à ultra haute pression, et efficacement dégradées par le micro-organisme. Après 72 heures de fermentation, l'allergénicité de la matrice initiale a été réduite d'au moins 95 %.

### 2.2/ Fermentation par Aspergillus oryzae

Pour ce micro-organisme, des tests ont été réalisés, en appliquant les protocoles expérimentaux ci-dessus, d'une part à partir de graines d'arachide crues, et d'autre part à partir de graines d'arachide grillées. Le protocole décrit dans l'Exemple A a été appliqué à l'identique sur ces dernières, de sorte à obtenir un homogénéisât dit d'arachide grillée.

Les graines d'arachide grillées ont été obtenues conformément à l'enseignement du document FR-A-2 713 447.

Après 72 heures de fermentation par *Aspergillus oryzae,* et extraction protéique, suivant le protocole indiqué ci-dessus, les protéines de chaque fraction obtenue (Surnageant, Fraction soluble et Fraction insoluble) sont séparées par électrophorèse SDS-PAGE. Le témoin utilisé est un extrait protéique de graines d'arachide crues.

Le gel obtenu après coloration est montré sur la figure 7.

On observe que par rapport à l'extrait brut de graines d'arachide non traitées (Piste 2), pour toutes les fractions protéiques obtenues après fermentation de l'homogénéisât, que ce dernier ait été obtenu à partir de graines d'arachide crues (Pistes 3 à 5) ou grillées (Pistes 6 à 8), les bandes correspondant aux allergènes majeurs de l'arachide (environ 63 kDa pour Ara h, environ 42-45 kDa pour Ara h 3 et environ 16 et 17 kDa pour Ara h 2) ont disparu. Ces protéines ne sont plus présentes dans les fermentâts obtenus, ou en quantité très faible.

Le résultat de l'analyse par Western blot de ces mêmes fractions est montré sur la figure 8. On y observe clairement, pour tous les extraits obtenus après traitement par fermentation de graines d'arachide crues (Pistes 3 à 5) comme de graines d'arachide grillées (Pistes 6 à 8), qu'une quantité nettement moindre de protéines interagissent avec les anticorps anti-Ara h 1, anti-Ara h 2 ou anti-Ara h 3, par rapport à l'extrait obtenu à partir de graines d'arachide crues non traitées (Piste 2).

Les résultats obtenus par dosage ELISA, pour chacun des anticorps anti-Ara h 1, anti-Ara h 2 ou anti-Ara h 3, après 72 heures de fermentation, sont montrés dans le Tableau 2 ci-après.

**Tableau 2 - Teneur en Ara h 1, Ara h 2, Ara h 3 des extraits protéiques après fermentation de l'homogénéisât de l'Exemple A (graines crues) et d'un homogénéisât obtenu par un protocole similaire à partir de graines d'arachide grillées, par Aspergillus oryzae, déterminée par test ELISA**

| | | Ara h 1 A | % Ara h 1 | Ara h 2 A | % Ara h 2 | Ara h 3 A | % Ara h 3 |
|---|---|---|---|---|---|---|---|
| Surnageant | Crues non traitées | 450 | | 493 | | 372 | |
| | Crues traitées | 26 | -94% | 24 | -95% | 28 | -92% |
| | Grillées non traitées | 181 | | 128 | | 134 | |
| | Grillées traitées | 26 | -86% | 23 | -82% | 21 | -84% |
| Fraction soluble | Crues non traitées | 450 | | 493 | | 372 | |
| | Crues traitées | 12 | -97% | 21 | -96% | 16 | -96% |
| | Grillées non traitées | 181 | | 128 | | 134 | |
| | Grillées traitées | 30 | -83% | 18 | -97% | 27 | -80% |
| Fraction insoluble | Crues non traitées | 539 | | 273 | | 280 | |
| | Crues traitées | 47 | -91% | 31 | -89% | 24 | -91% |
| | Grillées non traitées | 301 | | 293 | | 175 | |
| | Grillées traitées | 67 | -78% | 65 | -78% | 46 | -74% |

### où A représente l'absorbance à 450 nm

Par rapport à l'extrait protéique obtenu à partir de graines d'arachide non traitées, on observe, après 72 h de fermentation par *Aspergillus oryzae,* une diminution très significative de la teneur en protéines allergènes majeurs Ara h 1, Ara h 2, et Ara h 3 dans les extraits protéiques obtenus aussi bien à partir de graines d'arachide crues que de graines d'arachide traitées.

Ces résultats démontrent que les fermentâts obtenus après broyage de graines d'arachide crues ou grillées, homogénéisation à ultra haute pression et fermentation par *Aspergillus oryzae,* conformément à un mode de mise en oeuvre particulier du procédé selon l'invention, présentent un degré d'allergénicité fortement réduit par rapport à l'arachide crue non traitée. Les principales protéines allergènes de l'arachide, Ara h 1, Ara h 2, et Ara h 3, ont été efficacement extraites de la matrice solide initiale par l'homogénéisation à haute pression, et efficacement dégradées par le micro-organisme. En particulier, pour les graines crues, après 72 heures de fermentation, l'allergénicité de la matrice initiale a été réduite d'au moins 90 %.

### 2.3/ Fermentation par Bacillus subtilis

Après 72 heures de fermentation par *Bacillus subtilis,* et extraction protéique, suivant le protocole indiqué ci-dessus, les protéines de deux fractions obtenues (Fraction soluble et Fraction insoluble) sont séparées par électrophorèse SDS-PAGE. Le témoin utilisé est un extrait protéique de graines d'arachide crues.

Le gel obtenu après coloration est montré sur la figure 9.

On y observe que pour les fractions protéiques obtenues après fermentation de l'homogénéisât (Pistes 2 à 4), par rapport à l'extrait brut de graines d'arachide non traitées (Piste 1), les bandes correspondant aux allergènes majeurs de l'arachide (environ 63 kDa pour Ara h, environ 42-45 kDa pour Ara h 3 et environ 16 et 17 kDa pour Ara h 2) ont disparu.

Le résultat de l'analyse par Western blot de ces mêmes fractions est montré sur la figure 10. On n'y observe, pour les extraits obtenus après traitement par fermentation (Pistes 2 à 4), aucune bande témoin de la liaison de protéines à l'un quelconque des trois anticorps anti-Ara h 1, anti-Ara h 2 ou anti-Ara h 3.

Les résultats obtenus par dosage ELISA, pour chacun des anticorps anti-Ara h 1, anti-Ara h 2 et anti-Ara h 3, après 72 heures de fermentation, sont montrés dans le Tableau 3 ci-après.

**Tableau 3 - Teneur en Ara h 1, Ara h 2, Ara h 3 des extraits protéiques après fermentation de l'homogénéisât de l'Exemple A par Bacillus subtilis, déterminée par test ELISA**

| | Ara h 1 A | % Ara h 1 | Ara h 2 A | % Ara h 2 | Ara h 3 A | % Ara h 3 |
|---|---|---|---|---|---|---|
| Non traité | 456 | | 351 | | 382 | |
| Traité Surnageant | 23 | -95% | 18 | -95% | 17 | -96% |
| Traité Fraction soluble | 24 | -95% | 19 | -95% | 21 | -95% |
| Traité Fraction insoluble | 12 | -97% | 15 | -96% | 13 | -97% |

### où A représente l'absorbance à 450 nm

Par rapport à l'extrait protéique obtenu à partir de graines d'arachide non traitées, on observe, après 72 h de fermentation, une diminution significative de la teneur en protéines allergènes majeurs Ara h 1, Ara h 2, et Ara h 3. Pour toutes les fractions d'extraction, cette diminution est supérieure ou égale à 95 %.

Les résultats ci-dessus montrent clairement que le fermentât obtenu après broyage de graines d'arachide crues, homogénéisation à ultra haute pression et fermentation par *Bacillus subtilis,* conformément à un mode de mise en oeuvre particulier du procédé selon l'invention, présente un degré d'allergénicité fortement réduit par rapport à l'arachide crue non traitée de départ. Les principales protéines allergènes de l'arachide, Ara h 1, Ara h 2, et Ara h 3, ont été efficacement extraites de la matrice solide initiale par l'homogénéisation à ultra haute pression, et efficacement dégradées par le micro-organisme. Après 72 heures de fermentation, l'allergénicité de la matrice initiale a été réduite d'au moins 95 %.

La description ci-avant illustre clairement que par ses différentes caractéristiques et leurs avantages, la présente invention atteint les objectifs qu'elle s'était fixés. En particulier, elle fournit un procédé de préparation d'un aliment hypoallergénique, à partir d'une matrice alimentaire solide à forte allergénicité, qui est non polluant, et qui permet de conserver dans l'aliment les propriétés gustatives, organoleptiques et nutritionnelles de la matrice de départ.

### REFERENCES BIBLIOGRAPHIQUES

Chung S.-Y., Champagne E.T. (2007) Effects of phytic acid on peanut allergens and allergenic properties of Extracts. J. Agric. Food Chem. 55:9054-9058
Chung S.-Y., Yang W. (2008) Effects of pulsed UV-light on peanut allergens in extracts and liquid peanut butter. J. Food Chem. 73:C400
Davis P., Williams, S (1998) Protein modification by thermal processing. Allergy 53:102-105
Kato T., et al. (2000) Release of allergenic proteins from rice grains induced by high hydrostatic pressure. J. Agric. Food Chem. 48: 3124-3129
Lecluse W.J. (1979) Homogénéisateurs à haute pression. Informations Chimie 191: 1-8
Van Boxtel E.L., Koppelman S.J. et al. (2008) Détermination of pepsin-susceptible and pepsin-resistant epitopes in native and heat-treated peanut allergen ara h 1. J. Agric. Food Chem. 56:2223-2230

## Revendications

1. Procédé de préparation d'un aliment à allergénicité réduite à partir d'une matrice alimentaire solide particulaire à plus forte allergénicité, contenant des protéines allergènes, ladite matrice alimentaire étant à base de graines d'arachide brutes, de fruits à coque bruts ou de fruits, **caractérisé en ce que** ledit procédé comprend une étape de traitement d'une dispersion de ladite matrice alimentaire solide dans un véhicule aqueux, par homogénéisation à haute pression en conditions hydrodynamiques à une pression comprise entre 200 et 1000 bars et à une température comprise entre 15 et 90 °C, de sorte à obtenir un homogénéisât constitué d'une dispersion de protéines allergènes initialement contenues dans la matrice en mélange avec des particules solides de ladite matrice.

2. Procédé selon la revendication 1, **caractérisé en ce que** la matrice alimentaire solide est constituée de graines d'arachide brutes et/ou de fruits à coque bruts.

3. Procédé selon l'une des revendications 1 ou 2, **caractérisé en ce que** la matrice alimentaire solide est soumise à une étape de broyage préalablement à l'étape de traitement par homogénéisation à haute pression.

4. Procédé selon la revendication 3, selon lequel la matrice alimentaire solide est soumise à ladite étape de broyage après dispersion dans le véhicule aqueux.

5. Procédé selon l'une quelconque des revendications 1 à 4, **caractérisé en ce que** la dispersion de ladite matrice alimentaire solide dans un véhicule aqueux comprend un rapport en poids de matrice alimentaire solide par volume de véhicule aqueux compris entre 50/50 et 5/95.

6. Procédé selon l'une quelconque des revendications 1 à 5, **caractérisé en ce que** l'étape de traitement par homogénéisation à haute pression est suivie par une étape de traitement de l'homogénéisât obtenu par un agent de dégradation des protéines.

7. Procédé selon la revendication 6, **caractérisé en ce que** l'agent de dégradation des protéines est un agent protéolytique.

8. Procédé selon l'une des revendications 6 à 7, **caractérisé en ce que** l'agent de dégradation des protéines est un micro-organisme.

9. Procédé selon la revendication 8, selon lequel ledit micro-organisme est un micro-organisme probiotique.

10. Procédé selon l'une quelconque des revendications 8 à 9, selon lequel ledit micro-organisme est une bactérie.

11. Procédé selon l'une quelconque des revendications 8 à 9, selon lequel ledit micro-organisme est un champignon.

12. Procédé selon l'une quelconque des revendications 8 à 11, **caractérisé en ce que** l'homogénéisât est additionné de sucre, d'amidon et/ou d'acide préalablement à la fermentation.

## Patentansprüche

1. Ein Verfahren zum Vorbereiten eines Nahrungsmittels das weniger allergen bei einer bestimmten Matrix einer festen Nahrung ist, welche stärker allergen ist und allergene Proteine enthält. Grundlage besagter Lebensmittelmatrix sind rohe Erdnusssamen, rohe Baumnüsse oder Früchte, **gekennzeichnet dadurch, dass** besagtes Verfahren aus einem Schritt besteht, bei dem eine Verteilung besagter Matrix des festen Nahrungsmittels in einem wässrigen Mittel behandelt wird und zwar durch Hochdruck-Homogenisierung unter hydrodynamischen Bedingungen, bei einem Druck von 200 bis 1000 Bar und einer Temperatur von 15 °C bis 90 °C, so dass eine Homogenat entsteht, das aus einer Verteilung von allergenen Proteine besteht und das ursprünglich in der Matrix als eine Mischung mit festen Teilchen besagter Matrix enthalten war.

2. Das Verfahren, wie in Anspruch 1 beansprucht, **gekennzeichnet dadurch, dass** die Matrix der festen Nahrung aus rohen Erdnusssamen und/oder rohen Baumnüssen besteht.

3. Das Verfahren, wie entweder in Anspruch 1 oder 2 beansprucht, **gekennzeichnet dadurch, dass** die Matrix der festen Nahrung vor dem Behandlungsschritt der Hochdruck-Homogenisierung einem Mahlvorgang unterliegt.

4. Das Verfahren, wie in Anspruch 3 beansprucht, **gekennzeichnet dadurch, dass** die Matrix der festen Nahrung nach Verteilung in dem wässrigen Mittel besagtem Mahlvorgang unterliegt.

5. Das Verfahren, wie in einem der Ansprüche 1 bis 4 beansprucht, **gekennzeichnet dadurch, dass** die Verteilung besagter Matrix der festen Nahrung in dem wässrigen Mittel in einem Verhältnis von 50/50 bis 5/95 des Gewichts der Matrix der festen Nahrung zum Volumen des wässrigen Mittels steht.

6. Das Verfahren, wie in einem der Ansprüche 1 bis 5 beansprucht, **gekennzeichnet dadurch, dass** auf den Behandlungsschritt der Hochdruck-Homogenisierung ein Schritt folgt, bei dem das erhaltene Homogenat mit einem proteinspatenden Wirkstoff behandelt wird.

7. Das Verfahren, wie in Anspruch 6 beansprucht, **gekennzeichnet dadurch, dass** es sich bei dem proteinspatenden Wirkstoff um einen proteolytischen Wirkstoff handelt.

8. Das Verfahren, wie entweder in Anspruch 6 oder 7 beansprucht, **gekennzeichnet dadurch, dass** der proteinspatenden Wirkstoff ein Mikroorganismus ist.

9. Das Verfahren, wie in Anspruch 8 beansprucht, **gekennzeichnet dadurch, dass** besagter Mikroorganismus ein probiotischer Mikroorganismus ist.

10. Das Verfahren, wie entweder in Anspruch 8 oder 9 beansprucht, **gekennzeichnet dadurch, dass** besagter Mikroorganismus ein Bakterium ist.

11. Das Verfahren, wie entweder in Anspruch 8 oder 9 beansprucht, **gekennzeichnet dadurch, dass** besagter Mikroorganismus ein Pilz ist.

12. Das Verfahren, wie in einem der Ansprüche 8 bis 11 beansprucht, **gekennzeichnet dadurch, dass** das Homogenat vor der Fermentierung mit Zucker, Stärke und/oder mit Säure ergänzt wird.

## Claims

1. A method for preparing a food that is less allergenic from a particulate solid food matrix that is more allergenic and contains allergenic proteins, said food matrix being based on raw peanut seeds, raw tree nuts or fruits, **characterized in that** said method comprises a step of treating a dispersion of said solid food matrix in an aqueous vehicle, by high-pressure homogenization under hydrodynamic conditions at a pressure of between 200 and 1000 bars and at a temperature of between 15 and 90 °C, so as to obtain a homogenate consisting of a dispersion of allergenic proteins initially contained in the matrix as a mixture with solid particles of said matrix.

2. The method as claimed in claim 1, **characterized in that** the solid food matrix consists of raw peanut seeds and/or raw tree nuts.

3. The method as claimed in either of claims 1 and 2, **characterized in that** the solid food matrix is subjected to a grinding step prior to the high-pressure homogenization treatment step.

4. The method as claimed in claim 3, **characterized in that** the solid food matrix is subjected to said grinding step after dispersion in the aqueous vehicle.

5. The method as claimed in any one of claims 1 to 4, **characterized in that** the dispersion of said solid food matrix in an aqueous vehicle comprises a ratio of weight of solid food matrix to volume of aqueous vehicle of between 50/50 and 5/95.

6. The method as claimed in any one of claims 1 to 5, **characterized in that** the high-pressure homogenization treatment step is followed by a step of treating the obtained homogenate using a protein-degrading agent.

7. The method as claimed in claim 6, **characterized in that** the protein-degrading agent is a proteolytic agent.

8. The method as claimed in either of claims 6 and 7, **characterized in that** the protein-degrading agent is a microorganism.

9. The method as claimed in claim 8, **characterized in that** said microorganism is a probiotic microorganism.

10. The method as claimed in either of claims 8 and 9, **characterized in that** said microorganism is a bacterium.

11. The method as claimed in either of claims 8 and 9, **characterized in that** said microorganism is a fungus.

12. The method as claimed in any one of claims 8 to 11, **characterized in that** the homogenate is supplemented with sugar, with starch and/or with acid prior to the fermentation.
